# FASCICULE DE BREVET EUROPEEN

(11) **EP 2 964 999 B1**
(45) Date de publication et mention de la délivrance du brevet: **19.08.2020**
(21) Numéro de dépôt: 14713189.0
(22) Date de dépôt: 26.02.2014
(51) Int. Cl.: B60Q 1/38, F21V 8/00, B60Q 1/00, B60Q 1/26, F21S 43/239, F21S 43/249, F21S 43/20, F21S 43/50, F21S 43/243

(54) **DISPOSITIF D'INDICATION DE CHANGEMENT DE DIRECTION D'UN VÉHICULE, À GUIDE DE LUMIÈRE ET ÉCRAN OPALIN**
VORRICHTUNG ZUR ANZEIGE DES RICHTUNGSWECHSELS EINES FAHRZEUGS MIT EINEM LICHTLEITER UND EINEM OPALBILDSCHIRM
DEVICE FOR INDICATING A CHANGE IN DIRECTION OF A VEHICLE, WITH LIGHT GUIDE AND OPALINE SCREEN

(30) Priorité: 05.03.2013 FR 1351918
(43) Date de publication de la demande: 13.01.2016
(73) Titulaire: PSA Automobiles SA, 78300 Poissy (FR)
(72) Inventeur: CARROUGET, Alain, F-28700 Levainville (FR); VIDEIRA, Filipe, F-78140 Velizy Villacoublay (FR); MOYNIER, Gilles, F-72190 Sarge Les Le Mans (FR)
(86) Numéro de dépôt international: PCT/FR2014/050414
(87) Numéro de publication internationale: WO 2014/135762

(56) Documents cités:
- EP-A1- 2 161 494
- WO-A1-2012/093126
- DE-A1- 10 333 607
- DE-A1-102005 048 498
- DE-A1-102006 013 931
- DE-A1-102011 016 405
- FR-A1- 2 934 353
- US-A- 5 939 979
- US-A1- 2003 193 815
- US-A1- 2011 260 616

## Description

L'invention concerne les dispositifs d'indication qui sont chargés, notamment, d'indiquer les changements de direction des véhicules qu'ils équipent.

La plupart des véhicules terrestres qui sont autorisés à circuler sur des voies de circulation comportent des dispositifs d'indication chargés d'indiquer aux personnes situées dans leur voisinage que leur conducteur s'apprête à changer de direction. De tels dispositifs d'indication sont généralement appelés « clignotants ».

Certains de ces dispositifs d'indication comprennent un premier ensemble d'au moins deux sources de lumière propres à générer des photons, et un guide de lumière de type plat (ou « flat guide », ou encore « à éclairage direct »), propre à transférer les photons qui alimentent sa face arrière vers sa face avant en vue de leur transfert vers l'extérieur pour assurer une fonction photométrique (ici de clignotant).

De tels dispositifs d'indication assurent leur fonction photométrique de façon réglementaire, mais, hélas, lorsque leurs sources de lumière sont des diodes lumineuses (ou LEDs), ils ne délivrent pas leurs photons de façon homogène sur toute la face avant de leur guide de lumière, en particulier lorsque cette face avant présente une forme complexe. En fait, l'intensité de la lumière au niveau de la face avant varie notablement d'une portion à une autre, car l'homogénéité n'est bien assurée que sensiblement dans l'axe des LEDs mais pas hors d'axe. Par conséquent, cela peut empêcher certaines personnes placées en regard des portions de faible intensité lumineuse de percevoir le clignotement, et cela induit un effet visuel inesthétique.

Certes, il serait possible de remplacer le guide de lumière par un écran opalin (c'est-à-dire pas tout à fait opaque et pas tout à fait translucide) pour obtenir une diffusion de lumière sensiblement homogène, mais cela ne permet pas de réaliser une fonction photométrique réglementaire.

Le document FR 2 934 353 A1 décrit un clignotant comprenant des sources de lumière éclairant la tranche d'un guide de lumière plan. Une partie de la lumière atteint un écran diffusant situé à l'extrémité du guide de lumière, une autre partie est extraite du guide de lumière et dirigée vers des réflecteurs afin d'augmenter la surface éclairante.

L'invention a donc pour but d'améliorer la situation.

Elle propose notamment à cet effet un dispositif d'indication, destiné à équiper un véhicule, et comprenant un premier ensemble d'au moins deux premières sources de lumière propres à générer des premiers photons, et un guide de lumière de type plat, propre à transférer des premiers photons alimentant une face arrière vers une face avant en vue de leur transfert vers l'extérieur pour assurer une fonction photométrique.

Un dispositif d'indication de changement de direction selon l'invention est défini dans la revendication 1. Il comprend :
- un deuxième ensemble d'au moins deux deuxièmes sources de lumière propres à générer des deuxièmes photons sensiblement en même temps que des premières sources de lumière associées, et
- un écran opalin situé à proximité immédiate du guide de lumière et propre à diffuser les deuxièmes photons vers l'extérieur pour assurer un éclairage sensiblement homogène participant à la fonction photométrique.

Grâce à cet éclairage sensiblement homogène assuré par l'écran opalin, toutes les portions de la face avant du guide de lumière apparaissent éclairées de façon sensiblement identique, alors que dans le même temps le guide de lumière assure la fonction photométrique de façon réglementaire.

Le dispositif d'indication selon l'invention peut comporter d'autres caractéristiques qui peuvent être prises séparément ou en combinaison, et notamment :
- le premier ensemble peut comprendre un premier nombre de premières sources de lumière qui est strictement inférieur à un deuxième nombre de deuxièmes sources de lumière que comprend le deuxième ensemble ;
- les deuxièmes sources de lumière peuvent être agencées pour générer des deuxièmes photons d'une première couleur. Dans ce cas, il peut comprendre un troisième ensemble d'au moins deux troisièmes sources de lumière propres à générer des troisièmes photons d'une seconde couleur, différente de la première couleur, à destination de l'écran opalin pour qu'il les diffuse vers l'extérieur pour assurer un autre éclairage sensiblement homogène ;
   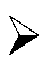 le troisième ensemble peut comprendre un troisième nombre de troisièmes sources de lumière supérieur ou égal au deuxième nombre ;
- le guide de lumière peut être placé juste au-dessus de l'écran opalin et peut être en partie séparé de ce dernier par une paroi opaque ;
- chaque source de lumière peut être une diode lumineuse (électroluminescente ou laser) ;
- la face avant du guide de lumière peut comprendre des motifs tridimensionnels (ou 3D) propres à transférer les premiers photons vers l'extérieur selon des directions choisies ;
- la face arrière du guide de lumière peut être convexe.

L'invention propose également un bloc optique de véhicule, éventuellement de type automobile, comprenant un dispositif d'indication du type de celui présenté ci-avant.

L'invention propose également un véhicule, éventuellement de type automobile, et comprenant au moins un dispositif d'indication du type de celui présenté ci-avant ou au moins un bloc optique du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue de face (dans un plan YZ), une partie latérale inférieure d'un boîtier de bloc optique, équipée d'un exemple de réalisation d'un dispositif d'indication selon l'invention, et
- la figure 2 illustre schématiquement et fonctionnellement le dispositif d'indication de la figure 1 dans une vue en coupe selon l'axe II-II.

L'invention a notamment pour but de proposer un dispositif d'indication D destiné à faire partie d'un véhicule, éventuellement de type automobile.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout véhicule terrestre comprenant au moins un dispositif d'indication D destiné à assurer au moins une fonction photométrique d'indication de changement de direction (ou clignotant), ainsi qu'éventuellement une fonction d'alerte (warning et freinage d'urgence) et/ou une fonction de localisation dans un parking et/ou une fonction de feu diurne (ou DRL (pour « Daytime running Light (or Lamp) » - signalisation lumineuse allumée automatiquement lorsque le véhicule est mis en fonctionnement)). Ainsi, elle concerne également et notamment les motocyclettes, les cars (ou bus), les camions, les véhicules utilitaires, les engins de voirie et les engins de travaux publiques.

Par ailleurs, on considère dans ce qui suit, à titre d'exemple non limitatif, que le dispositif d'indication D est destiné à faire partie d'un bloc optique B (très partiellement représenté) d'un véhicule. Mais l'invention n'est pas limitée à cette application. En effet, un dispositif d'indication D, selon l'invention, peut être un équipement indépendant d'un bloc optique (projecteur avant ou feu arrière). Dans ce cas, il comporte également son propre boîtier, et il peut, éventuellement, s'agir de ce que l'homme de l'art appelle un répétiteur latéral, c'est-à-dire un clignotant implanté sur l'un des deux côtés latéraux du véhicule, par exemple dans un rétroviseur latéral.

On notera que le bloc optique B, qui comprend ici le dispositif d'indication D, peut être aussi bien un phare (ou projecteur avant), qu'un feu arrière.

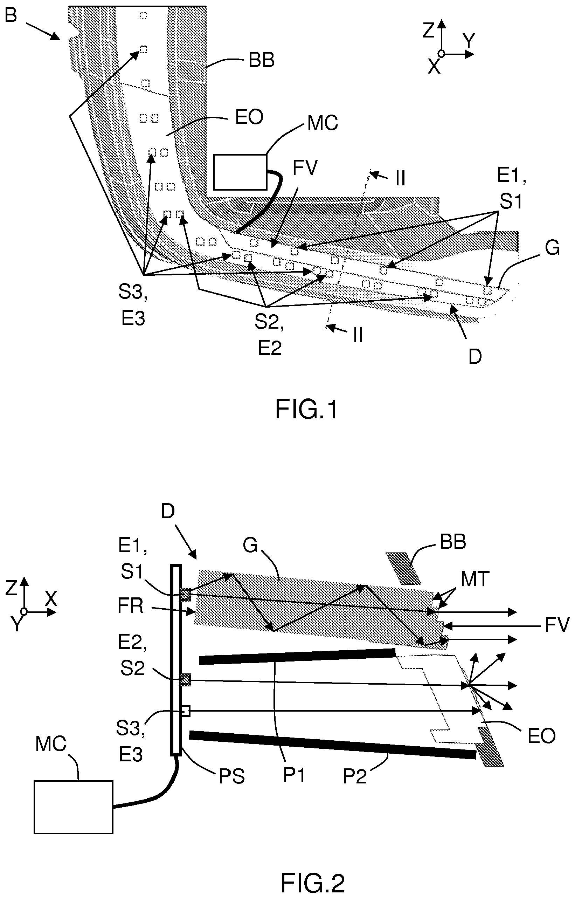

On a schématiquement et fonctionnellement représenté sur la figure 1 une partie latérale inférieure d'un boîtier BB d'un bloc optique B, équipée d'un exemple de réalisation non limitatif d'un dispositif d'indication D selon l'invention.

Comme cela est illustré sur les figures 1 et 2, un dispositif d'indication D, selon l'invention, comprend au moins des premier E1 et deuxième E2 ensembles de sources de lumière, un guide de lumière G et un écran opalin EO.

Le premier ensemble E1 comprend au moins deux premières sources de lumière S1 qui sont propres à générer des premiers photons.

Par exemple, chaque première source de lumière S1 peut être une diode lumineuse. Dans ce cas, chaque diode lumineuse peut être une diode électroluminescente (ou LED) ou bien une diode laser. Mais les premières sources de lumière S1 peuvent être d'un autre type. Ainsi, il pourrait également et notamment s'agir de lampes (ou ampoules).

Egalement par exemple, et comme illustré non limitativement sur la figure 2, les premières sources de lumière S1 peuvent être installées sur une plaque de support PS. Cette plaque de support PS peut, par exemple, être une carte à circuits imprimés, de type PCB (« Printed Circuit Board »), rigide ou flexible (« de type « Flex »).

Chaque première source de lumière S1 peut être agencée de manière à générer des premiers photons présentant une couleur, par exemple orange pour la fonction de clignotant si l'écran opalin EO est réalisé dans un matériau qui ne modifie pas la couleur des premiers photons. Mais cette couleur pourrait être blanche si le guide de lumière G est réalisé dans un matériau teinté en orange.

Le guide de lumière G est de type plat (ou « flat guide », ou encore « à éclairage direct »). Il comprend donc une face arrière FR, alimentée en premiers photons par le premier ensemble E1 situé derrière elle, et une face avant FV, propre à transférer des premiers photons alimentant sa face arrière FR vers sa face avant FV, en vue de leur transfert vers l'extérieur pour assurer au moins une fonction photométrique. Cette fonction photométrique est ici au moins la fonction de clignotant. Par exemple, le guide de lumière G peut être réalisé en PC (ou polycarbonate) ou en PMMA.

Afin d'augmenter la proportion des premiers photons qui parviennent effectivement au niveau de la face avant FV et qui vont assurer la fonction photométrique, il peut être avantageux que la face arrière FR du guide de lumière G soit convexe (vu de l'extérieur et donc du premier ensemble E1).

Par ailleurs, et comme illustré non limitativement sur la figure 2, la face avant FV du guide de lumière G peut avantageusement comprendre des motifs tridimensionnels (ou 3D) MT propres à transférer les premiers photons vers l'extérieur selon des directions privilégiées choisies, adaptées à la fonction photométrique. Comme illustré, ces motifs tridimensionnels MT peuvent, par exemple, être en gradins avec des décrochements transversaux.

Le deuxième ensemble E2 comprend au moins deux deuxièmes sources de lumière S1 qui sont propres à générer des deuxièmes photons sensiblement en même temps que les premiers photons générés par des premières sources de lumière S1 associées.

On notera que dans l'exemple non limitatif illustré sur la figure 1, le premier ensemble E1 comprend un premier nombre N1 de premières sources de lumière S1 qui est strictement inférieur au deuxième nombre N2 de deuxièmes sources de lumière S2 que comprend le deuxième ensemble E2. Ici, N1 est égal à 6, tandis que N2 est égal à 11. Par conséquent, les six premières sources de lumière S1 sont associées respectivement à six des onze deuxièmes sources de lumière S2 et donc fonctionnent sensiblement en même temps qu'elles. Mais d'autres valeurs, plus ou moins grandes que celles mentionnées ci-dessus, peuvent être envisagées pour N1 et N2.

Par exemple, chaque deuxième source de lumière S2 peut être une diode lumineuse. Dans ce cas, chaque diode lumineuse peut être une diode électroluminescente (ou LED) ou bien une diode laser. Mais les deuxièmes sources de lumière S2 peuvent être d'un autre type. Ainsi, il pourrait également et notamment s'agir de lampes (ou ampoules).

Egalement par exemple, et comme illustré non limitativement sur la figure 2, les deuxièmes sources de lumière S2 peuvent être installées sur la plaque de support PS.

Chaque deuxième source de lumière S2 peut être agencée de manière à générer des deuxièmes photons présentant une première couleur, par exemple orange pour la fonction de clignotant si l'écran opalin EO est réalisé dans un matériau qui ne modifie pas la couleur des deuxièmes photons. Mais cette première couleur pourrait être blanche si l'écran opalin EO est réalisé dans un matériau teinté en orange.

On notera que la couleur des premiers photons en sortie de la face avant FV du guide de lumière G et la première couleur des deuxièmes photons en sortie de la face avant de l'écran opalin EO doit être sensiblement la même du fait qu'ils participent à la même fonction photométrique.

L'écran opalin EO est situé à proximité immédiate du guide de lumière G, c'est-à-dire juste en-dessous de la partie avant du guide de lumière G contenant la face avant FV, comme dans l'exemple non limitatif illustré sur les figures 1 et 2, ou bien juste au-dessus de la partie avant du guide de lumière G contenant la face avant FV. Cet écran opalin EO est propre à diffuser les deuxièmes photons vers l'extérieur pour assurer un éclairage sensiblement homogène participant à la fonction photométrique.

On comprendra que grâce à cet éclairage sensiblement homogène assuré par l'écran opalin EO juste en-dessous (ou juste au-dessus) du guide de lumière G, toutes les portions de la face avant FV du guide de lumière G apparaissent éclairées de façon sensiblement identique et réglementaire, y compris lorsque la forme du guide de lumière G et/ou la forme de l'écran opalin EO sont/est complexe(s), puisque l'éclairage assuré par le premier ensemble E1 et le guide de lumière G est lui-même réglementaire.

Cet écran opalin EO peut, par exemple, être réalisé dans un matériau synthétique qui n'est pas tout à fait opaque et pas tout à fait translucide, comme par exemple un PMMA ou un PC.

Lorsque N2 est supérieur à N1 l'écran opalin EO présente une extension supérieure à celle de la face avant FV du guide de lumière G comme dans l'exemple non limitatif illustré sur la figure 1. Il existe alors dans l'extension de l'écran opalin EO des deuxièmes sources de lumière S2 qui sont placées au-delà de la dernière des premières sources de lumière S1 et donc au-delà des deuxièmes sources de lumière S2 qui sont associées à ces dernières.

On notera que le dispositif d'indication D peut comprendre des moyens de contrôle MC agencés pour autoriser une alimentation des premier E1 et deuxième E2 ensembles propre à faire fonctionner sensiblement simultanément les premières S1 et deuxièmes S2 sources de lumière associées les unes après les autres pour indiquer un changement de direction du véhicule selon un mode dit défilant.

Dans ce mode défilant, les premières sources de lumière S1 et les deuxièmes sources de lumière S2 qui leurs sont respectivement associées sont allumées sensiblement simultanément les unes après les autres, sous le contrôle des moyens de contrôle MC, selon le sens du changement de direction. Par exemple, si un changement de direction vers la droite a été décidé, les moyens de contrôle MC autorisent tout d'abord l'alimentation des première S1 et deuxième S2 sources de lumière (qui sont situées les plus près de l'axe longitudinal médian du véhicule), puis des deuxièmes première S1 et deuxième S2 sources de lumière (qui sont situées à côté des premières), et ainsi de suite jusqu'à ce que, ici, les sixièmes première S1 et deuxième S2 sources de lumière situées les plus près du côté latéral droit du véhicule soient allumées. Les deuxièmes sources de lumière S2 qui sont placées au-delà de la dernière des premières sources de lumière S1 dans l'extension de l'écran opalin EO sont ensuite allumées les unes après les autres. Puis on recommence un cycle identique au niveau des premières première S1 et deuxième S2 sources de lumière.

On notera que les moyens de contrôle MC peuvent être éventuellement installés sur la plaque de support PS.

Afin de bien séparer les premiers et deuxièmes photons, il est avantageux, comme illustré non limitativement sur la figure 2, que le dispositif d'indication D comprenne au moins une première paroi P1 opaque installée entre son guide de lumière G et la zone qui est située en amont de son écran opalin EO (c'est-à-dire ici entre la plaque de support PS et la face arrière de l'écran opalin EO).

On notera que le dispositif d'indication D peut également comprendre une seconde paroi P2 opaque installée, ici, entre la plaque de support PS et la face avant de l'écran opalin EO, de manière à augmenter la proportion des deuxièmes photons qui parviennent effectivement au niveau de l'écran opalin EO.

On notera également que le dispositif d'indication D peut éventuellement assurer une fonction photométrique additionnelle. Dans ce cas, et comme illustré non limitativement sur les figures 1 et 2, il peut comprendre un troisième ensemble E3 d'au moins deux troisièmes sources de lumière S3. Ces dernières (S3) sont propres à générer des troisièmes photons d'une seconde couleur, différente de la première couleur des deuxièmes sources de lumière S2, à destination de l'écran opalin EO pour qu'il les diffuse vers l'extérieur pour assurer un autre éclairage sensiblement homogène. Par exemple, cette fonction photométrique additionnelle peut être une fonction de feu diurne (ou DRL) ou de lanterne ou encore d'indicateur latéral (ou « side marker »).

La seconde couleur des troisièmes photons est par exemple blanche lorsque celle des deuxièmes photons est orange et que l'écran opalin EO est réalisé dans un matériau qui ne modifie pas la couleur des troisièmes photons.

Par exemple, et comme illustré non limitativement sur les figures 1 et 2, le troisième ensemble E3 peut comprendre un troisième nombre N3 de troisièmes sources de lumière S3 qui est supérieur ou égal au deuxième nombre N2. Cela est notamment utile dans le cas d'une fonction de feu diurne. Ici, N3 est égal à 14. Mais d'autres valeurs, plus ou moins grandes que celle mentionnée ci-avant, peuvent être envisagées pour N3.

Egalement par exemple, chaque troisième source de lumière S3 peut être une diode lumineuse. Dans ce cas, chaque diode lumineuse peut être une diode électroluminescente (ou LED) ou bien une diode laser. Mais les troisièmes sources de lumière S3 peuvent être d'un autre type. Ainsi, il pourrait également et notamment s'agir de lampes (ou ampoules).

Egalement par exemple, et comme illustré non limitativement sur la figure 2, les troisièmes sources de lumière S3 peuvent être installées sur la plaque de support PS.

## Revendications

1. Dispositif d'indication de changement de direction (D) pour un véhicule, ledit dispositif (D) comprenant un premier ensemble (E1) d'au moins deux premières sources de lumière (S1) propres à générer des premiers photons, et un guide de lumière (G) de type plat, propre à transférer des premiers photons alimentant une face arrière (FR) vers une face avant (FV) en vue de leur transfert vers l'extérieur pour assurer une fonction photométrique, ledit dispositif comprenant en outre i) un deuxième ensemble (E2) d'au moins deux deuxièmes sources de lumière (S2) propres à générer des deuxièmes photons sensiblement en même temps que des premières sources de lumière (S1) associées, et ii) un écran opalin (EO) situé à proximité immédiate dudit guide de lumière (G) et propre à diffuser lesdits deuxièmes photons vers l'extérieur pour assurer un éclairage sensiblement homogène participant à ladite fonction photométrique, **caractérisé en ce qu'**il comprend des moyens de contrôle (MC) agencés pour autoriser une alimentation desdits premier (E1) et deuxième (E2) ensembles, propre à faire fonctionner sensiblement simultanément lesdites premières (S1) et lesdites deuxièmes (S2) sources de lumière qui leurs sont respectivement associées; les premières (S1) et deuxièmes (S2) sources de lumière ainsi associées étant allumées les unes après les autres, sous le contrôle des moyens de contrôle (MC) pour indiquer un changement de direction dudit véhicule selon un mode dit défilant.

2. Dispositif selon la revendication 1, **caractérisé en ce que** ledit premier ensemble (E1) comprend un premier nombre de premières sources de lumière (S1) strictement inférieur à un deuxième nombre de deuxièmes sources de lumière (S2) que comprend ledit deuxième ensemble (E2).

3. Dispositif selon l'une des revendications 1 et 2, **caractérisé en ce que** lesdites deuxièmes sources de lumière (S2) sont agencées pour générer des deuxièmes photons d'une première couleur, et **en ce qu'**il comprend un troisième ensemble (E3) d'au moins deux troisièmes sources de lumière (S3) propres à générer des troisièmes photons d'une seconde couleur, différente de ladite première couleur, à destination dudit écran opalin (EO) pour qu'il les diffuse vers l'extérieur pour assurer un autre éclairage sensiblement homogène.

4. Dispositif selon la revendication 3, **caractérisé en ce que** ledit troisième ensemble (E3) comprend un troisième nombre de troisièmes sources de lumière (S3) supérieur ou égal audit deuxième nombre.

5. Dispositif selon l'une des revendications 1 à 4, **caractérisé en ce que** ledit guide de lumière (G) est placé juste au-dessus dudit écran opalin (EO) et est en partie séparé de ce dernier (EO) par une paroi (P1) opaque.

6. Dispositif selon l'une des revendications 1 à 5, **caractérisé en ce que** chaque source de lumière (S1, S2, S3) est une diode lumineuse.

7. Bloc optique (B) de véhicule, **caractérisé en ce qu'**il comprend un dispositif d'indication (D) selon l'une des revendications précédentes.

8. Véhicule, **caractérisé en ce qu'**il comprend au moins un dispositif d'indication (D) selon l'une des revendications 1 à 6.

9. Véhicule, **caractérisé en ce qu'**il comprend au moins un bloc optique (B) selon la revendication 7.

## Patentansprüche

1. Richtungsänderungsanzeigevorrichtung (D) für ein Fahrzeug, wobei die Vorrichtung (D) eine erste Gruppe (E1) von mindestens zwei ersten Lichtquellen (S1), die erste Photonen erzeugen können, und einen Lichtleiter (G) vom flachen Typ umfasst, geeignet zum Übertragen von ersten Photonen, die eine Rückseite (FR) speisen, auf eine Vorderseite (FV) im Hinblick auf ihre Übertragung nach außen, um eine photometrische Funktion zu gewährleisten, wobei die Vorrichtung außerdem umfasst: i) eine zweite Gruppe (E2) von mindestens zwei zweiten Lichtquellen (S2), die geeignet ist, zweite Photonen im Wesentlichen gleichzeitig mit den zugehörigen ersten Lichtquellen (S1) zu erzeugen, und ii) einen Opalschirm (EO), der in unmittelbarer Nähe des Lichtleiters (G) angeordnet und in der Lage ist, die zweiten Photonen nach außen zu streuen, um eine im wesentlichen homogene Beleuchtung zu liefern, die an der photometrischen Funktion teilnimmt, **dadurch gekennzeichnet, daß** er Kontrollmittel (MC) umfaßt, die so angeordnet sind, daß sie eine Versorgung der ersten (E1) und der zweiten (E2) Gruppe zulassen, die in der Lage sind, im wesentlichen gleichzeitig die erste (S1) und die zweite (S2) Lichtquelle zu betreiben, die ihnen jeweils zugeordnet sind; wobei die erste (S1) und die zweite (S2) Lichtquelle, die so zugeordnet sind, nacheinander unter der Steuerung der Kontrollmittel (MC) eingeschaltet werden, um eine Richtungsänderung des Fahrzeugs in einem sogenannten Scroll-Modus anzuzeigen.

2. Vorrichtung nach Anspruch 1, **dadurch gekennzeichnet, dass** die erste Gruppe (E1) eine erste Anzahl von ersten Lichtquellen (S1) umfasst, die strikt kleiner ist als eine zweite Anzahl von zweiten Lichtquellen (S2), die die zweite Gruppe (E2) umfasst.

3. Vorrichtung nach einem der Ansprüche 1 und 2, **dadurch gekennzeichnet, dass** die zweiten Lichtquellen (S2) so angeordnet sind, dass sie zweite Photonen einer ersten Farbe erzeugen, und dass sie eine dritte Gruppe (E3) von mindestens zwei dritten Lichtquellen (S3) umfasst, die dritte Photonen einer zweiten Farbe erzeugen können, die sich von der ersten Farbe unterscheidet und für den Opalschirm (EO) bestimmt ist, so dass er sie nach außen diffundiert, um eine weitere im Wesentlichen homogene Beleuchtung zu liefern.

4. Vorrichtung nach Anspruch 3, **dadurch gekennzeichnet, dass** die dritte Anordnung (E3) eine dritte Anzahl von dritten Lichtquellen (S3) umfasst, die größer oder gleich der zweiten Anzahl ist.

5. Vorrichtung nach einem der Ansprüche 1 bis 4, **dadurch gekennzeichnet, dass** der Lichtleiter (G) unmittelbar über dem Opalschirm (EO) angeordnet und von diesem (EO) teilweise durch eine opake Wand (P1) getrennt ist.

6. Vorrichtung nach einem der Ansprüche 1 bis 5, **dadurch gekennzeichnet, dass** jede Lichtquelle (S1, S2, S3) eine Leuchtdiode ist.

7. Optische Fahrzeugeinheit (B), **dadurch gekennzeichnet, dass** sie eine Anzeigevorrichtung (D) nach einem der vorstehenden Ansprüche umfasst.

8. Fahrzeug, **dadurch gekennzeichnet, dass** es mindestens eine Anzeigevorrichtung (D) nach einem der Ansprüche 1 bis 6 umfasst.

9. Fahrzeug, **dadurch gekennzeichnet, dass** es mindestens eine optische Einheit (B) nach Anspruch 7 umfasst.

## Claims

1. A direction change indicating device (D) for a vehicle, said device (D) comprising a first assembly (E1) of at least two first light sources (S1) suitable for generating first photons, and a flat type light guide (G), suitable for transferring first photons feeding a rear face (FR) to a front face (FV) with a view to their transfer to the outside in order to provide a photometric function, said device further comprising i) a second assembly (E2) of at least two second light sources (S2) suitable for generating second photons substantially at the same time as associated first light sources (S1), and ii) an opaline screen (EO) located in the immediate vicinity of said light guide (G) and capable of diffusing said second photons towards the outside in order to provide a substantially homogeneous illumination participating in said photometric function, **characterized in that** it comprises control means (MC) arranged to authorize a power supply to said first (E1) and second (E2) assemblies, capable of operating substantially simultaneously said first (S1) and said second (S2) light sources which are respectively associated therewith; the first (S1) and second (S2) light sources thus associated being switched on one after the other, under the control of the control means (MC) to indicate a change of direction of said vehicle in a so-called scrolling mode.

2. Device according to claim 1, **characterized in that** said first assembly (E1) comprises a first number of first light sources (S1) strictly less than a second number of second light sources (S2) which said second assembly (E2) comprises.

3. A device according to one of claims 1 and 2, **characterized in that** said second light sources (S2) are arranged to generate second photons of a first color, and **in that** it comprises a third set (E3) of at least two third light sources (S3) capable of generating third photons of a second color, different from said first color, intended for said opaline screen (EO) so that it diffuses them towards the outside in order to provide another substantially homogeneous illumination.

4. Device according to claim 3, **characterized in that** said third assembly (E3) comprises a third number of third light sources (S3) greater than or equal to said second number.

5. Device according to one of claims 1 to 4, **characterized in that** said light guide (G) is placed just above said opaline screen (EO) and is partly separated from the latter (EO) by an opaque wall (P1).

6. Device according to one of claims 1 to 5, **characterized in that** each light source (S1, S2, S3) is a light-emitting diode.

7. Vehicle optical unit (B), **characterized in that** it comprises an indicating device (D) according to one of the preceding claims.

8. Vehicle, **characterized in that** it comprises at least one indicating device (D) according to one of the claims 1 to 6.

9. A vehicle, **characterized in that** it comprises at least one optical unit (B) according to claim 7.
